Europäisches Patentamt

European Patent Office

Office européen des brevets

(19)

(11) Publication number: **0 139 723**
**B1**

(12) **EUROPEAN PATENT SPECIFICATION**

(45) Date of publication of patent specification: **27.01.88**

(51) Int. Cl.⁴: **B 60 R 25/00**

(21) Application number: **84901677.9**

(22) Date of filing: **02.04.84**

(86) International application number:
**PCT/US84/00494**

(87) International publication number:
**WO 84/03864 11.10.84 Gazette 84/24**

(54) **VEHICLE AUTOMATIC SWITCHING BURGLAR ALARM.**

(30) Priority: **05.04.83 IL 68294**
**20.03.84 US 591489**

(73) Proprietor: **RATZABI, Moshe**
**1915 Avenue M**
**Brooklyn, NY 11223 (US)**

(43) Date of publication of application:
**08.05.85 Bulletin 85/19**

(72) Inventor: **RATZABI, Moshe**
**1915 Avenue M**
**Brooklyn, NY 11223 (US)**

(45) Publication of the grant of the patent:
**27.01.88 Bulletin 88/04**

(74) Representative: **Lorenz, Eduard**
**Rechtsanwälte Eduard Lorenz - Bernhard Seidler**
**Margrit Seidler - Dipl.-Ing. Hans-K. Gossel Dr. Ina**
**Philipps - Dr. Paul B. Schäuble Dr. Siegfried**
**Jackermeier**
**Widenmayerstrasse 23 D-8000 München 22 (DE)**

(84) Designated Contracting States:
**AT BE CH DE FR GB LI LU NL SE**

(56) References cited:
**US-A-3 569 930**
**US-A-3 587 081**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an apparatus for arming and disarming a vehicle alarm according to the first part of independent claims 1 and 4. An apparatus of that kind is known from US—A—3 587 081. The known apparatus functions in response to locking and unlocking of an entrance way to the vehicle with a key. It comprises a housing adapted to be mounted on said vehicle adjacent said entranceway, a cylinder mounted in that housing and having a keyway adapted to receive a key conforming thereto, said cylinder being rotatable relative to that housing by the turning of said key inserted in said keyway in one direction for locking said entranceway and in the opposite direction for unlocking said entranceway and means for arming said alarm in response to rotation of said cylinder in said one direction and for disarming said alarm in response to rotation of said cylinder in the other direction.

Vehicle alarm systems are popular and exist in a wide variety of types. One of the important characteristics of an alarm system is the way in which it is operated.

A popular way of operating a vehicle alarm system is by using a key switch which is installed on the body of the car and is operated by the driver before leaving the vehicle and upon returning to it. This type of alarm avoids the need for an alarm unit with a delay circuit because it is armed and disarmed from outside the vehicle. Another manner of alarm operation is by way of a hidden switch inside the car. The advantage of this type of alarm is easy operation. However, it requires an alarm unit with delay circuits. Another type of alarm is operated by the ignition switch of the car. In this system, the alarm unit is armed upon turning the ignition switch off (or after removing the key from the ignition switch). The disadvantage of this system is that it requires that the key be inserted into the ignition switch every time the vehicle is entered to prevent sounding of the alarm.

The apparatus known from US—A—3 587 081 is a pin-tumbler type of a lock which includes a switch that is actuated whenever the cylinder of the lock is rotated, either by a properly fitted key or a tool used while the lock is being picked. A time-delay circuit is provided to actuate the alarm in response to the closing of the switch only after the switch has been closed for a predetermined amount of time. The time-delay circuit parameters are chosen such that during normal opening of the lock with an authorized key the switch will be closed for a time less than that required to actuate the alarm. However, when the cylinder is urged toward an open position while it is being picked, the switch will be actuated for the minimum time required to pick the lock which is in eccess of the predetermined time-delay, and the alarm will thereby be activated.

It is an object of the invention to provide an apparatus for arming and disarming a vehicle alarm working with a function of a conventional door-lock, which is uncomplicated and highly reliable.

According to the invention this object is solved by the characterizing features of independent claims 1 and 4.

The first solution is characterized by means for actuating said alarm in response to rotation of said cylinder by a key, which does not fully conform to said keyway inserted therein, wherein said actuating means comprises cam means freely mounted in circumscribing relationship to said cylinder adjacent a portion of said keyway, said cam means having a neutral position and an alarm actuation position, means for urging said cam means toward said neutral position, means for engaging said cam means for rotation to said alarm actuating position upon rotation of said cylinder by a key, which does not conform to said keyway and by alarm actuating switch means mounted for engagement by said cam means only when in said alarm actuating position.

Another solution of the object of the invention is characterized by first cam means fixedly mounted on one of said cylinders and said housing and a plurality of switches fixedly mounted on the other of said housing and said cylinder, said cam means engaging at least one of said switches to arm the alarm when the cylinder is rotated in said locking direction and engaging another of said switches to disarm said alarm when said cylinder is rotated in said unlocking direction, and means for signalling that said alarm has been armed, comprising a member movably mounted with respect to said cylinder for motion between a first position at which it freely permits insertion of said key in said cylinder and a second position in the path of said key within said cylinder.

The concept of the invention as defined in claims 1 and 4, advantageously obviates the need for a time-delay circuit and provides a central alarm means to which sensors may be connected to protect against entry without tampering with a door-lock. On the other hand US—A—3 587 081 has no central alarm means and only protects against tampering with a door-lock which includes the patented device. Moreover, the apparatus according to the invention provides an automatic tactile indication, that said alarm has been armed, which feature also contributes to the concept of high reliability.

The locking mechanism used for arming and disarming the alarm, according to the present invention, employs the regular door lock which has the known use of locking and unlocking the door when leaving the vehicle or re-entering it. However, the locking mechanism of the invention performs a function in addition to merely locking the door. It sets the alarm unit to "on" (armed) and "off" (disarmed) states, automatically, and it gives an indication of the state. The apparatus of the invention is electromechanical and designed to work with the conventional lock system which is used in modern vehicles.

Other and further objects of the invention will be apparent from the following drawings and description of a preferred embodiment of the invention in which like reference numerals are used to indicate like parts in the various views.

Figure 1 is a sectional side elevation view of the mechanism of the preferred embodiment of the invention.

Figure 2 is an end view of one of the components in the mechanism of Figure 1.

Figure 3 is an end view of another of the components of the mechanism illustrated in Figure 1.

Figure 4 is an electrical diagram of the circuit of the apparatus of the invention.

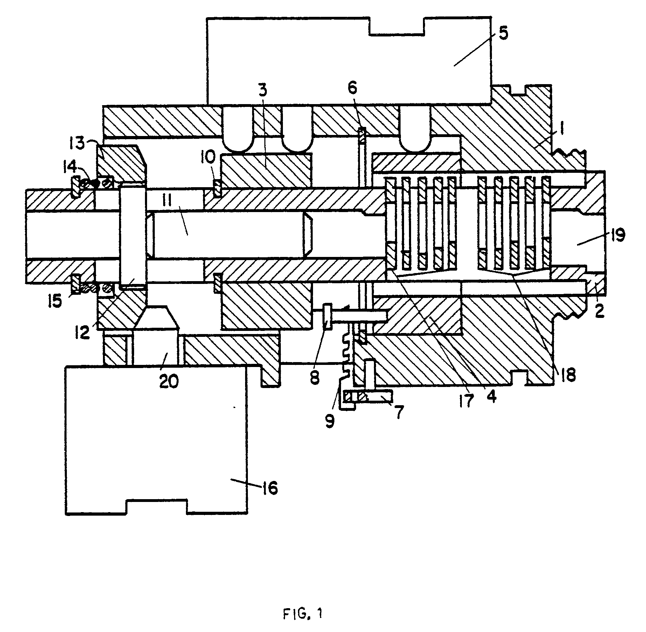

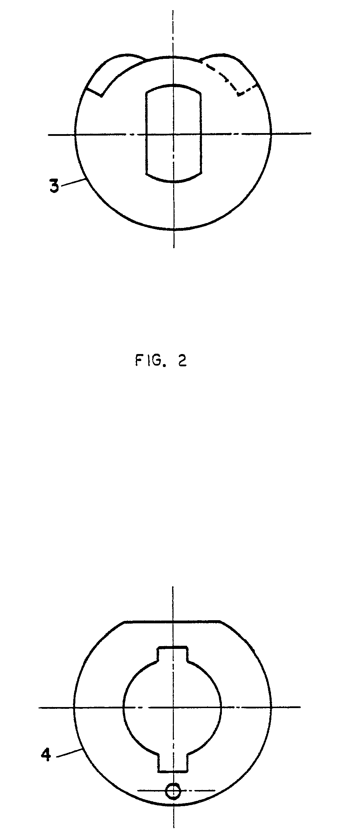

Referring now to Fig. 1, the mechanism of the invention includes a hollow metal sleeve 1 which serves as a housing for the unit. Into the sleeve 1 there is fitted a locking cylinder 2 which can turn in either direction after insertion of the proper key therein. On the locking cylinder 2 there is force fitted a cam 3 more readily seen in Fig. 2. The outside surface of the cam 3 is contoured to actuate a switch AS2 when it turns in one direction and to operate a switch AS3 when turned in the opposite direction. The cam 3 and the cylinder 2 always move together.

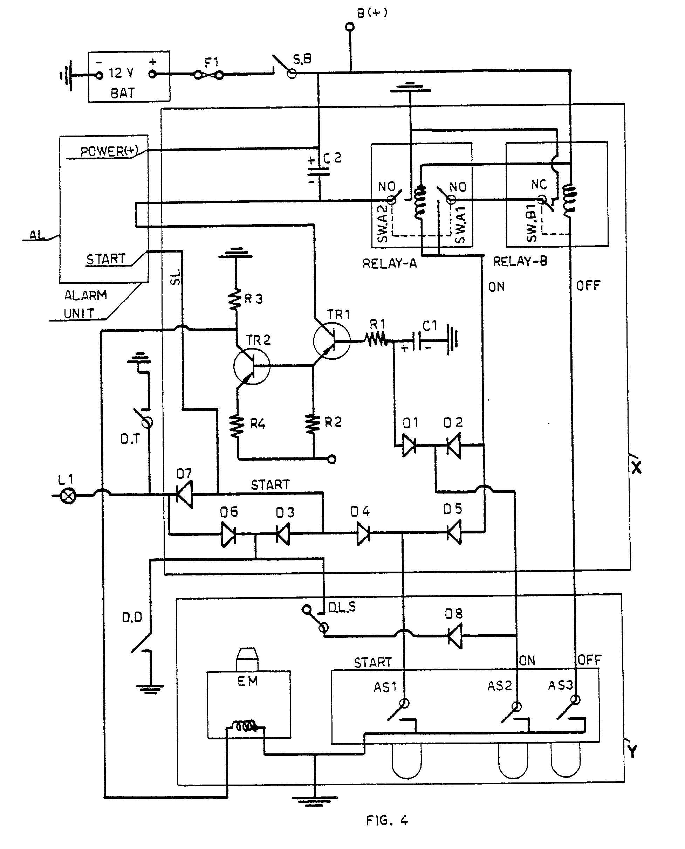

A tampering detector including a cam 4, shown in detail in Fig. 3, is freely mounted about the cylinder 2 for relative rotation with respect thereto. A keyway 19 is provided within the cylinder 2 for receiving a key to turn the cylinder 2 for the conventional purpose of locking and unlocking an entranceway to the vehicle. Adjacent the keyway 19 are two sets of axially displaced tumblers 17 and 18. The cam 4 and tumblers 17 are mounted to that any torque applied to the tumblers 17 when they are not aligned by insertion and turning of an unauthorised key is imparted to the cam 4. The keyway 19 in the cylinder 2 is thus designed in such a way that any rotary motion of the cylinder 2 caused by a key having teeth which do not properly mesh with the tumblers 17 will cause rotation of the cam 4 and actuation of an adjacent switch AS1 which is mounted on the interior of the housing 1. The function and operation of the cam 4 and switch AS1 are described, more fully, below.

A switch housing 5 containing switches AS1, AS2 and AS3 is mounted on the outside surface of the housing 1 and as previously described, the switches AS1, AS2 and AS3 are actuated by the motion of the cams 3 and 4.

There is another assembly which gives an indication that the electric circuit has operated to arm an alarm unit AL. The alarm unit AL is conventional and not part of the invention which is directed to the arming and actuating system for the alarm unit AL. The locking cylinder 2 is hollow and inside it there is slidably disposed an ejector pin 11 the purpose of which is to eject the key from the locking cylinder 2. The ejector pin 11 is pushed by a vertical second pin 12 that is connected to a rejection ring 13 which is released in response to movement of the plunger 20 of a solenoid 16.

The electric switch 5, including the switches AS1. AS2, and AS3 and the electromagnet or solenoid 16 are connected to the alarm unit AL to operate it.

A spring washer 6 is received within a recess in the inner circumference of the sleeve 1 to restrict axial movement of the cam 4. An index pin 8 received within an aperture in the cam 4 is adapted to engage a spring 9 which is connected to an index pin 7 disposed in the outer circumference of the housing 1. As can be seen in Fig. 1, the pins 7 and 8, and spring 9 oppose rotation of the cam 4 relative to the housing 1 and urge the cam 4 toward a central neutral or steady state position.

As shown in Fig. 1, the solenoid 16 has its plunger 20 extended, thereby maintaining the rejection ring 13 against one end of a compressed coil spring 14, the other end of which is urged against a fixed spring washer 15. A safety spring washer 10 limits axial movement of the cam 3.

The operation of the system will now be described from the moment of leaving the vehicle by the driver up to the moment of his return.

As the driver leaves his vehicle he exits through the door and then puts the key into the locking cylinder 2 for the purpose of locking the door. When the key is fully inserted into the cylinder 2, the ejector pin 11 is urged inwardly against the vertical pin 12, thereby causing the snap ring 13 to be held by the plunger 20 of the solenoid 16 against the now compressed spring 14. The driver then turns the key in the locking direction. The locking cylinder 2 and the cam 3 turn with the key. After rotation of the key of about 45°, the rotary motion of the cam 3 actuates the switch AS2. The operation of switch AS2 causes relay A (see Fig. 4) to be latched into a closed state and to remain that way. When the normally open relay contacts of relay A are closed, the alarm unit AL is armed. At the same time, the switch AS2 causes the solenoid 16 to be operated as explained below. When the key is returned back to the center position it can then be withdrawn, thereby permitting the snap ring 13 to be pushed outwardly, and the force is transferred by the vertical pin 12 to the central ejector pin 11 and the key is pushed out. The rejection of the key is an indication that the alarm unit AL is armed.

When the driver returns to his vehicle he puts the key into the locking cylinder 2 in order to unlock the door and turns the key in the unlocking direction. The rotary motion of the cylinder 2 with the cam 3 actuates the switch AS3. Switch AS3 applies voltage to the coil of relay B which when actuated causes relay A to open. The opening of relay A disarms the alarm unit AL.

In order to arm the alarm when a door is locked by the conventional locking button (not shown) on the door inside the vehicle, instead of by a key, a switch DLS is connected to the locking button. The switch DLS is momentarily closed when the button is placed in the locking position and the switch DD is closed when the car door is open. Under the foregoing conditions, a circuit from the coil of the relay A is completed to ground through diode D8 in a similar manner to when the switch AS2 is closed by turning the cylinder 2 with a key, except that a conventional exit time delay circuit (not shown) should be included in the alarm unit AL so that the door may be closed before the alarm is actuated.

When the alarm unit AL is armed it reacts like any other alarm system. The opening of any door of the car can turn it on as may other acts, depending on what type of alarm sensors the unit is connected to. Depending on the type of sensors used (which are not part of the invention) the unit could be turned on and the alarm sounded even if a theft is attempted without opening any car door. Diodes D1, D2, D3, D4, D5, D6, D7 and D8 direct the flow of current as will be understood by those skilled in the art.

The invention precludes the possibility of disarming the alarm unit AL by insertion of an imperfect key into the the keyway 19 in the cylinder 2. The insertion and turning of a key in which there are sufficient teeth cut to properly mesh in the keyway 19 with the tumblers 18 but not with the tumblers 17, and turn the cylinder 2 to unlock the door will cause relative rotation between the cam 4 and the switch AS1. This is due to the fact that the cam 4 cricumscribes but is mounted free of the cylinder and will not rotate with the cylinder when an authorized key is used to turn it. However, a key which meshes properly with one group of tumblers 18, sufficiently to turn the cylinder 2 and unlock the door but not with the other group of tumblers 17 will cause the tumblers 17 to fail to align properly and, hence, to engage the cam 4 and rotate it as the cylinder 2 is turned thereby actuating the switch AS1 which results in sounding of the alarm. The closing of switch AS1 enables current to flow to ground from the alarm unit AL through diode D4.

The electronic process that has been specified in the above explanation is caused by the operation of the integrated switch 5 which includes the switches AS1, AS2 and AS3. The electronic assembly is housed in three separate physical units in the preferred embodiment of the invention. The first unit Y includes the integrated switch 5 with switches AS1, AS2, and AS3, and the solenoid 16 which are mounted on the housing 1. The second unit X is an automatic switching box which contains the two relays A and B as well as the transistorized circuit shown in Figure 4. The third unit is the separately mounted electronic alarm unit AL which is connected to respond to the output of the automatic switching box X.

The operation of switch AS2 turns on relay A which receives a negative voltage through a diode D2. The relay A is connected in a latching circuit. The normally open integrated contacts SWA1 and SWA2 of the relay A close thereby arming the alarm unit AL. At the same time, the closed switch AS2 causes the discharge of the capacitor C1 through diode D1 to the negative ground, thereby causing the transistorized circuit including transistors TR1 and TR2, and resistors R1, R2, R3 and R4 to acutate the solenoid 16. The actuation of the switch AS3 then energizes relay B causing its normally closed integrated contacts SWB1 to open thereby cutting off the voltage applied to relay A and turning off the alarm unit AL.

The operation of the switch AS1 actuates the alarm unit AL and sounds the alarm by supplying negative voltage to the alarm unit AL through the start line SL via diode D4.

The driver door switch DD closes a circuit when the driver door is opened and it supplies negative voltage to the start line SL of the alarm unit AL through diode D3 therby causing immediate sounding of the alarm.

The other door switches are connected in the manner of switch DT shown in Fig. 4. When a door switch DT is actuated, it supplies negative voltage to the start line SL of the alarm unit AL, again immediately sounding the alarm.

The switching box X is connected to the automobile's battery or other power source through main switch SB and fuse P1. The power to the alarm unit AL is supplied from the same line. In case of any failure or uncontrolled operation, the power can be cut off manually by opening the main switch SB. The system will normally work in any case of attempted theft, or if the vehicle is entered in an unusual way (by the driver), e.g., getting in from a rear door which was inadvertently left unlocked.

It is to be appreciated that the foregoing is a description of a preferred embodiment of the invention. For example, the invention can be also used to control an alarm in an environment other than a motor vehicle.

**Claims**

1. Apparatus for arming and disarming a vehicle alarm in response to locking and unlocking of an entranceway to the vehicle with a key, comprising a housing (1) adapted to be mounted on said vehicle adjacent said entranceway; a cylinder (2) mounted in said housing (1) and having a keyway (19) adapted to receive a key conforming thereto, said cylinder (29) being rotatable relative to said housing (1) by the turning of said key inserted in said keyway (19) in one direction for locking said entranceway and in the opposite direction for unlocking said entranceway; and means (3, AS2, AS3) for arming said alarm (AL) in response to rotation of said cylinder (2) in said one direction and for disarming said alarm (AL) in response to rotation of said cylinder (2) in the other direction; characterized by means (4, AS1) for actuating said alarm in response to rotation of said cylinder (2) by a key, which does not fully conform to said keyway (19) inserted therein, wherein said actuating means (4, AS1) comprises cam means (4) freely mounted in circumscribing relationship to said cylinder (2) adjacent a portion of said keyway (19), said cam means having a neutral position and an alarm actuation position; means (7, 8, 9) for urging said cam means (4) toward said neutral position;

means (17, 18) for engaging said cam means (4) for rotation to said alarm actuating position upon rotation of said cylinder (2) by a key, which does not conform to said keyway (19) and by alarm actuating switch means (AS1) mounted for engagement by said cam means (4) only when in said alarm actuating position.

2. Apparatus according to claim 1, characterized in that said means include a leaf spring (9) having one end connected to said cam means and another end connected to said housing (1).

3. Apparatus according to claim 1 or 2, characterized by means (11, 12, 13, 14) for signalling that said alarm (AL) has been armed, comprising a member (11) movably mounted with respect to said cylinder (2) for motion between a first position which permits insertion of said key in said cylinder (2) and a second position in the path of said key within said cylinder (2).

4. Apparatus for arming and disarming a vehicle alarm (AL) in response to locking and unlocking of an entranceway to the vehicle comprising a housing (1) adapted to be mounted on said vehicle adjacent said entranceway; locking and unlocking means including a cylinder (2) mounted in said housing (1) and adapted to be rotated relative thereto by the turning of a key inserted therein in one direction for locking said entranceway and in the opposite direction for unlocking said entranceway; and means (3, AS2, AS3) for arming said alarm (AL) in response to the locking of said entranceway and for disarming said alarm (AL) in response to the unlocking of said entranceway; characterized by first cam means (3) fixedly mounted on one of said cylinders (2) and said housing (1) and a plurality of switches (AS2, AS3) fixedly mounted on the other of said housing (1) and said cylinder (2), said cam means (3) engaging at least one of said switches (AS2, AS3) to arm the alarm (AL) when the cylinder (2) is rotated in said locking direction and engaging another of said switches to disarm said alarm (AL) when said cylinder (2) is rotated in said unlocking direction; and means (11—14) for signalling that said alarm (AL) has been armed, comprising a member (11) movably mounted with respect to said cylinder (2) for motion between a first position at which it freely permits insertion of said key in said cylinder (2) and a second position in the path of said key within said cylinder (2).

5. Apparatus according to one of the preceding claims, characterized in that said movable member (11) is slidably mounted within a bore in said cylinder (2) and that they are provided with further means (16, 20) responsive to said arming and disarming means (3, AS2, AS3) for urging said member (11) to said second position when said alarm (AL) is armed.

6. Apparatus according to claim 5, characterized that said urging means comprise a spring (14) normally biassed to force said movable member (11) toward said second position and a solenoid (16) having a plunger (20) actuable between two states, said plunger (20) permitting said spring (14) to urge said member (11) toward said second position in one of said solenoid states and preventing said spring (14) from urging said member (11) toward said second position in the other of said states, whereby said key may be freely inserted into said cylinder (2).

7. Apparatus according to one of claims 4 to 6, characterized in that said locking means comprises door-locking button means operatively connected to switch means (DLS).

**Patentansprüche**

1. Vorrichtung zum Scharfschalten und Entschärfen eines Alarmgeräts in einem Fahrzeug aufgrund des Zusperrens und des Aufsperrens des Zugangsweges zu dem Fahrzeug mit einem Schlüssel, umfassend ein an dem genannten Fahrzeug neben dem genannten Zugangsweg anbringbares Gehäuse (1); einen in dem genannten Gehäuse (1) angeordneten Zylinder (2) mit einem Schlüsselkanal (19), der einen dazu passenden Schlüssel aufnehmen kann, wobei der genannte Zylinder (29) gegenüber dem genannten Gehäuse (1) drehbar ist, indem der in den genannten Schlüsselkanal (19) eingeführte genannte Schlüssel in der einen Richtung zum Zusperren des genannten Zugangsweges und in der entgegengesetzten Richtung zum Aufsperren des genannten Zugangsweges gedreht wird; und eine Einrichtung (3, AS2, AS3) zum Scharfschalten des genannten Alarmgeräts (AL) aufgrund der Drehung des genannten Zylinders (2) in der genannten einen Richtung und zum Entschärfen des genannten Alarmgeräts (AL) aufgrund der Drehung des genannten Zylinders (2) in der anderen Richtung; gekennzeichnet durch eine Einrichtung (4, AS1) zum Auslösen des genannten Alarmgeräts (AL) aufgrund einer Drehung des genannten Zylinders (2) durch einen nicht völlig zu dem genannten Schlüsselkanal (19) passenden, in diesen eingeführten Schlüssel, worin die genannte Auslöseeinrichtung (4, AS1) eine Nockeneinrichtung (4) umfaßt, welche neben einem Abschnitt des genannten Schlüsselkanals (19) um den genannten Zylinder (2) herum frei beweglich ist, wobei die genannte Nockeneinrichtung eine Neutralstellung und eine Alarmauslösestellung besitzt; eine Einrichtung (7, 8, 9), die die genannte Nockeneinrichtung (4) in Richtung auf die genannte Neutralstellung treibt; eine Einrichtung (17, 18), die die genannte Nockeneinrichtung (4) zum Drehen in die genannte Alarmauslöseposition veranlaßt, wenn der genannte Zylinder (2) durch einen Schlüssel, der nicht zu dem genannten Schlüsselkanal (19) paßt, gedreht wird, und durch eine Schalteinrichtung (AS1) zum Auslösen des Alarmgeräts, die so angeordnet ist, daß sie von der genannten Nockeneinrichtung (4) nur angegriffen wird, wenn diese sich in der genannten Alarmauslöseposition befindet.

2. Vorrichtung nach Anspruch 1, dadurch gekennzeichnet, daß die genannte treibende Einrichtung eine Blattfeder (9) umfaßt, deren eines Ende mit der genannten Nockeneinrichtung und deren anderes Ende mit dem genannten Gehäuse (1) verbunden ist.

3. Vorrichtung nach Anspruch 1 oder 2, gekennzeichnet durch eine Einrichtung (11, 12, 13, 14) zum Signalisieren, daß das genannte Alarmgerät (AL) scharfgeschaltet ist, umfassend ein Organ (11), das gegenüber dem genannten Zylinder (2) zwischen einer ersten Stellung, die das Einführen des genannten Schlüssels in den genannten Zylinder (2) erlaubt, und einer zweiten Stellung in der Bahn des genannten Schlüssels innerhalb des genannten Zylinders (2) bewegbar angeordnet ist.

4. Vorrichtung zum Scharfschalten und Entschärfen eines Alarmgeräts (AL) in einem Fahrzeug aufgrund des Zusperrens und des Aufsperrens eines Zugangsweges zu dem Fahrzeug, umfassend ein an dem genannten Fahrzeug neben dem genannten Zugangsweg anbringbares Gehäuse (1); eine Zusperr- und Aufsperreinrichtung mit einem in dem genannten Gehäuse (1) angebrachten Zylinder (2), der gegenüber dem Gehäuse verdreht werden kann, indem ein eingeführter Schlüssel in der einen Richtung zum Zusperren des genannten Zugangsweges und in der entgegengesetzten Richtung zum Aufsperren des genannten Zugangsweges gedreht wird; und eine Einrichtung (3, AS2, AS3) zum Scharfschalten des genannten Alarmgeräts (AL) aufgrund des Zusperrens des genannten Zugangsweges und zum Entschärfen des genannten Alarmgeräts (AL) aufgrund des Aufsperrens des genannten Zugangsweges; gekennzeichnet durch eine erste Nockeneinrichtung (3), die fest auf dem Zylinder (2) oder dem Gehäuse (1) angebracht ist, und eine Mehrzahl Schalter (AS2, AS3), die fest auf dem Gehäuse (1) oder dem Zylinder (2) angebracht sind, wobei die genannte Nockeneinrichtung (3) mindestens einen der genannten Schalter (AS2, AS3) angreift, um das Alarmgerät (AL) scharfzustellen, wenn der Zylinder (2) in der genannten Zusperrichtung gedreht wird, und einen anderen der genannten Schalter angreift, um das genannte Alarmgerät (AL) zu entschärfen, wenn der genannte Zylinder (2) in der genannten Aufsperrichtung gedreht wird, und eine Einrichtung (11—14) zum Signalisieren, daß das genannte Alarmgerät (AL) scharfgeschaltet ist, umfassend ein Organ (11), das gegenüber dem genannten Zylinder (2) zwischen einer ersten Stellung, in der es ein unbehindertes Einführen des genannten Schlüssels in den genannten Zylinder (2) erlaubt, und einer zweiten Stellung in der Bahn des genannten Schlüssels innerhalb des genannten Zylinders (2) bewegbar angeordnet ist.

5. Vorrichtung nach einem der vorhergehenden Ansprüche, dadurch gekennzeichnet, daß das genannte bewegbare Organ (11) gleitend verschiebbar in einer Bohrung in dem genannten Zylinder (2) angeordnet ist, und daß weitere, auf die Scharfschaltungs- und Entschärfungseinrichtung (3, AS2, AS3) ansprechende Mittel (16, 20) vorgesehen sind, um das genannte Organ (11) in die genannte zweite Stellung zu treiben, wenn das genannte Alarmgerät (AL) scharfgeschaltet ist.

6. Vorrichtung nach Anspruch 5, dadurch gekennzeichnet, daß die genannte treibende Einrichtung eine Feder (14) umfaßt, die normalerweise so vorbelastet ist, daß sie das genannte bewegbare Organ (11) in Richtung auf die genannte zweite Stellung drückt, sowie ein mit einem Tauchkolben (20) versehenes Solenoid (16), das in zwei Zustände bringbar ist, wobei der genannte Tauchkolben (20) es der genannten Feder (14) in dem einen der beiden Solenoidzustände ermöglicht, das genannte Organ (11) in Richtung auf die genannte zweite Stellung zu trieben, und die genannte Feder (14) in dem anderen der genannten Zustände daran hindert, das genannte Organ (11) in Richtung auf die genannte zweite Stellung zu treiben, wodurch der genannte Schlüssel unbehindert in den genannten Zylinder (2) eingeführt werden kann.

7. Vorrichtung nach einem der Ansprüche 4 bis 6, dadurch gekennzeichnet, daß die genannte Zusperreinrichtung eine Türsperrknopf-Einrichtung umfaßt, die in Wirkverbindung mit einer Schalteinrichtung (DLS) steht.

**Revendications**

1. Appareil pour armer et désarmer une alarme de véhicule en réaction au verrouillage et au déverrouillage d'une voie d'entrée au véhicule avec une clé, comportant un boîtier (1) adapté pour être monté sur ledit véhicule à côté de ladite voie d'entrée, un cylindre (2) monté dans ledit boîtier (1) et ayant un trou de serrure (19) adapté pour recevoir la clé conforme à ce dernier, ledit cylindre (29) étant rotatif par rapport audit boîtier (1) par la rotation de ladite clé insérée dans ledit trou de serrure (19) dans une direction pour verrouiller ladite voie d'entrée et en direction opposée pour déverrouiller ladite voie d'entrée; et des moyens (3, AS2, AS3) pour armer ladite alarme (AL) en réaction à la rotation dudit cylindre (2) dans ladite première direction et pour désarmer ladite alarme (AL) en réaction à la rotation dudit cylindre (2) dans l'autre direction; caractérisé par un dispositif (4, AS1) pour actionner ladite alarme (AL) en réaction à la rotation dudit cylindre (2) par une clé qui n'est pas entièrement conforme au trou de serrure (19) et qui est insérée dans celui-ci, dans lequel ledit dispositif d'actionnement (4, AS1) comprend une came (4) montée librement en décrivant un mouvement autour dudit cylindre (2) à côté d'une partie dudit trou de serrure (19), ladite came ayant une position neutre et une position de déclenchement de l'alarme; des moyens (7, 8, 9) pour pousser ladite came (4) dans ladite position neutre; des moyens (17, 18) pour engager ladite came (4) pour faire tourner ladite alarme dans la position de déclenchement à la suite de la dudit rotation cylindre (2) par une clé qui n'est pas conforme audit trou de serrure (19) et en ce qu'un commutateur (AS1) de déclenchement de l'alarme est monté pour être engagé par ladite came (4) seulement lorsqu'il se trouve dans la position de déclenchement d'alarme.

2. Appareil selon la revendication 1 caractérisé en ce que lesdits moyens poussoirs comportent un ressort à lame (9) ayant une extrêmité connectée à ladite came et une autre extrêmité audit boîtier (1).

3. Appareil selon la revendication 1 ou 2, caractérisé en ce que des moyens (11, 12, 13, 14) sont prévus pour signaler que ladite alarme (AL) a été armée, comportant un membre (11) monté de manière mobile par rapport audit cylindre (2) pour effectuer le mouvement entre une première position qui permet l'insertion de ladite clé dans ledit cylindre (2) et une seconde position dans le passage de ladite clé à l'intérieur dudit cylindre (2).

4. Appareil pour armer et désarmer une alarme de véhicule (AL) en réaction au verrouillage et au déverrouillage d'une voie d'entrée au véhicule comportant un boîtier (1) adapté pour être monté sur ledit véhicule à côté de ladite voie d'entrée; des moyens de verrouillage et de déverrouillage comportant un cylindre (2) monté sur ledit boîtier (1) et adapté pour être tourné par rapport à ce dernier par la rotation d'une clé insérée dans le trou de serrure et tournée dans une première direction pour verrouiller ladite voie d'entrée et dans la direction opposée pour déverrouiller ladite voie d'entrée; et des moyens (3, AS2, AS3) pour armer ladite alarme (AL) en réaction au verrouillage de ladite voie d'entrée et pour désarmer ladite alarme (AL) en réaction au déverrouillage de ladite voie d'entrée, caractérisé en ce qu'une première came (3) est montée de manière fixe sur un desdits cylindres (2) et ledit boîtier (1) et qu'une pluralité de commutateurs (AS2, AS3) sont montés de manière fixe sur l'autre dit boîtier (1) et dit cylindre (2), ladite came (3) s'engageant au moins dans un desdits commutateurs (AS2, AS3), pour armer l'alarme (AL) lorsque le cylindre (23) est tourné dans ladite direction de verrouillage et s'engage dans un autre desdits commutateurs pour désarmer ladite alarme (AL) lorsque ledit cylindre (2) est tourné dans ladite direction de déverrouillage; et des moyens (11—14) pour signaler que ladite alarme (AL) a été armée, comportant un membre (11) monté de manière mobile par rapport audit cylindre (2) qui permet la libre insertion de ladite clé dans ledit cylindre (2) et une deuxième position dans le passage de ladite clé à l'intérieur dudit cylindre (2).

5. Appareil selon l'une des revendications précédentes caractérisé en ce que ledit membre mobile (11) est monté de manigenanntenre à pouvoir glisser à l'intérieur d'un perçage dans ledit cylindre (2) et que d'autres moyens (16, 20) sont prévus qui réagissent auxdits moyens d'armement et de désarmement (3, AS2, AS3) pour pousser ledit membre (11) en ladite deuxième position lorsque ladite alarme (AL) est armée.

6. Appareil selon la revendication 5 caractérisé en ce que lesdits moyens poussoirs comprennent un ressort (14) normalement sous pression pour forcer ledit membre mobile (11) vers ladite seconde position et un solénoïde (16) ayant un plongeur (20) pouvant être actionné entre deux états, ledit plongeur (20) permettant audit ressort (14) de pousser ledit membre (11) vers ladite seconde position dans un desdits états du solénoïde et empêche ledit ressort (14) de pousser ledit membre (11) vers la seconde position dans l'autre desdits états, ladite clé pouvant être librement insérée dans ledit cylindre (2).

7. Appareil selon l'une des revendications 4 à 6 caractérisé en ce que lesdits moyens de verrouillage comprennent des boutons de verrouillage de portière avec une connexion opérationnelle avec les moyens de commutation (DLS).

FIG. 1

FIG. 2

FIG. 4